# EUROPÄISCHE PATENTSCHRIFT

(11) **EP 2 353 730 B1**
(45) Veröffentlichungstag und Bekanntmachung des Hinweises auf die Patenterteilung: **28.01.2015**
(21) Anmeldenummer: 10159814.2
(22) Anmeldetag: 13.04.2010
(51) Int. Cl.: B05B 15/04, B05C 5/02, B05C 11/10, B01D 45/12, B05D 1/26, B05B 15/12, B05D 3/04, B05B 13/02, B01D 21/00, B05B 1/04

(54) **Vorrichtung zur Unterdruckapplikation von Primer**
Device for application of primer under vacuum
Dispositif d'application de primer par dépression

(30) Priorität: 29.01.2010 DE 102010006126
(43) Veröffentlichungstag der Anmeldung: 10.08.2011
(73) Patentinhaber: Düspohl Maschinenbau GmbH, 33758 Schloss Holte-Stukenbrock (DE)
(72) Erfinder: Wagner, Uwe, 33335 Gütersloh (DE)
(74) Vertreter: Ter Meer Steinmeister & Partner

(56) Entgegenhaltungen:
- WO-A1-2009/147481
- WO-A2-2010/009096
- DE-A1- 10 333 950
- DE-U1- 29 617 525
- US-A- 4 857 367
- US-A1- 2003 033 791
- US-A1- 2011 073 035

## Beschreibung

Die Erfindung betrifft ein Verfahren zur Unterdruckapplikation von Primer unter Verwendung einer Vorrichtung mit einem Reservoir für flüssigen Primer, einer Auftragdüse, die eine Auftragkammer und eine Absaugkammer aufweist, einem Zufuhrsystem zur Zufuhr von Primer aus dem Reservoir zu der Auftragkammer, einem Absaugsystem zum Absaugen von Luft und Primer aus der Absaugkammer, und einem Abscheider zum Abscheiden vom Primer aus der abgesaugten Luft und zum Zurückleiten des abgeschiedenen Primers in das Reservoir.

Aus DE 296 17 525 A1 ist eine Vorrichtung mit den oben genannten Merkmalen bekannt, die zur Unterdruckapplikation von Lack dient.

US 2003/033791 A1 beschreibt einen Luftreiniger, in dem Flüssigkeit mit Hilfe eines Zyklons abgeschieden wird.

In WO 2010/009969 A2 dient ein Zyklon zum Abscheiden von Feststoffen aus einem Dampf.

Wenn Werkstücke, beispielsweise Kunststoffprofile für Fenster, Türen und dergleichen, mit einem Oberflächendekor, etwa mit einer Lackschicht oder einer Ummantelung, z. B. einer Folienummantelung versehen werden sollen, so ist es zweckmäßig, auf die mit dem Dekor zur versehenden Oberflächen zunächst einen Primer aufzutragen, um eine hinreichende Haftung des danach aufzutragenden Lackes oder Klebers zu gewährleisten. Für den Auftrag des Primers hat sich eine Vorrichtung mit den oben angegebenen Merkmalen, die seit einiger Zeit von der Anmelderin hergestellt und vertrieben wird, als besonders zweckmäßig erwiesen. Der Abscheider wird bei der bekannten Vorrichtung durch eine Prallplatte gebildet, auf die das abgesaugte Gemisch aus Luft und Flüssigkeit aufprallt, so dass die Flüssigkeit an der Prallplatte aufgefangen wird und herabläuft, während die weitgehend vom Primer befreite Luft als Abluft abgegeben wird.

Aufgrund verschiedener Effekte, insbesondere der Verdunstung von Lösungsmittelbestandteilen des Primers und Ausfällungen von Feststoffpigmenten aus dem Primer, kommt es jedoch bei längerer Betriebsdauer zu einer allmählichen

Änderung der Konsistenz des in dem System umgewälzten Primers, so dass der Primer nur eine begrenzte Standzeit hat. Aufgrund verstärkter Ablagerungen im System kommt es außerdem zu kurzen Reinigungsintervallen.

Aufgabe der Erfindung ist es, ein Verfahren zu schaffen, das es erlaubt, die Standzeit des Primers zu verlängern.

Diese Aufgabe wird erfindungsgemäß dadurch gelöst, dass der Abscheider ein Zyklon ist.

Bekanntlich wird in einem Zyklon, wie er beispielsweise auch zum Abscheiden von Staub aus staubbelasteter Luft eingesetzt wird, ein rasch rotierender Luftwirbel erzeugt, der bewirkt, dass die Luft und die darin enthaltenen Feststoffbestandteile durch Fliehkraftwirkung voneinander getrennt werden. In der erfindungsgemäßen Vorrichtung bewirkt der Zyklon eine Trennung von Luft und Flüssigkeit (Primer).

Überraschend hat sich gezeigt, dass durch den Einsatz eines Zyklons als Abscheider die Verdunstungsverluste erheblich reduziert werden können. Bei der erfindungsgemäßen Vorrichtung beträgt der Anteil an organischen Lösungsmitteldämpfen in der Abluft nur etwa 10% des Wertes, der mit dem herkömmlichen Abscheider in der Form einer Prallplatte erreicht wurde. Darüber hinaus wird durch die Erfindung auch die Abscheidung und Ablagerung von Feststoffbestandteilen, z.B. Pigmentpartikeln aus dem flüssigen Primer erheblich vermindert. Während bei der herkömmlichen Vorrichtung mit Prallplatten-Abscheider bei Dauerbetrieb (24 Stunden am Tag) durchschnittlich schon nach etwa 2 Tagen eine Reinigung des Abscheidesystems erforderlich war, um aus dem Primer ausgefällte Feststoffbestandteile zu entfernen, erlaubt es die Erfindung, diese Reinigungsintervalle auf etwa 5 Tage zu verlängern.

Neben einer Verringerung des Wartungsaufwandes und einer Reduktion von Schadstoffemmissionen in die Umgebungsluft hat die Erfindung vor allem den Vorteil, dass der Primer wesentlich länger seine ursprüngliche, vom Hersteller spezifizierte Konsistenz behält. Das ist vor allem deshalb wichtig, weil die Her- steller von Primer die Wirksamkeit des Primers als Haftvermittler nur unter der Voraussetzung garantieren, dass der verarbeitete Primer stabil die vom Herstel- ler spezifizierte Konsistenz aufweist. Mit der erfindungsgemäßen Vorrichtung lassen sich diese Spezifikationen über einen längeren Zeitraum aufrechterhal- ten, so dass der im System umgewälzte Primer seltener ausgetauscht zu werden braucht.

Besonders vorteilhaft ist das Verfahren bei Primern, insbesondere Dispersions- Primern auf wässriger Basis, d.h., Primern, bei denen Wasser der Hauptbestand- teil des Lösungsmittels ist. Obgleich auch diese Primer in der Regel organische Lösungsmitteladditive enthalten, liegt ihr Flammpunkt generell bei mehr als 90°C und damit deutlich über dem Grenzwert von 55°C, von dem ab nach den einschlägigen Vorschriften Explosionsschutzmaßnahmen erforderlich sind. Im Absaug- und Abscheidesystem sind deshalb keine Explosionsschutzmaßnahmen nötig.

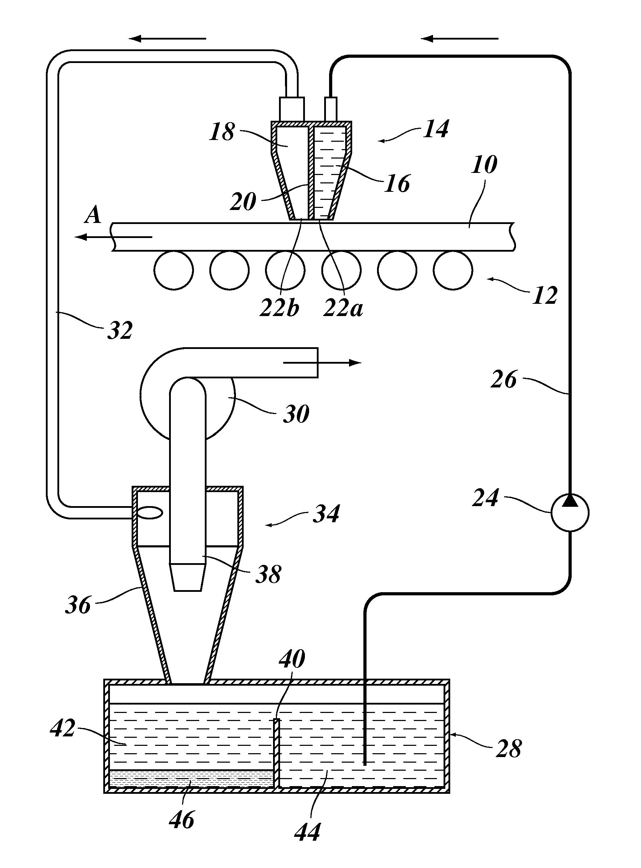

Bei Verarbeitung dieser Primer kann das Absaug- und Abscheidesystem mit einem Unterdruck von etwa 10 kPa betrieben werden, ohne dass es zu einer nennenswerten Verdampfung von Bestandteilen des Primers kommt. Gegen- stand der Erfindung ist deshalb auch ein Verfahren zum Auftrag von Primer auf wässriger Basis unter Verwendung der oben beschriebenen Vorrichtung.
Im folgenden wird ein Ausführungsbeispiel der erfindungsgemäßen Vorrichtung anhand der Zeichnung näher erläutert.

Die einzige Zeichnungsfigur zeigt eine schematische Skizze einer Vorrichtung zur Unterdruckapplikation von Primer auf die Oberfläche von Werkstücken.

Bei den Werkstücken handelt es sich im gezeigten Beispiel um Profile 10, beispielsweise Kunststoffprofile für Türen oder Fenster, die auf einem Rollenförderer 12 in Richtung des Pfeils A in der Zeichnung transportiert werden und dabei eine stationär angeordnete Auftragdüse 14 für Primer passieren. Die Auftragdüse 14 weist eine Auftragkammer 16 und eine Absaugkammer 18 auf, die durch eine Scheidewand 20 voneinander getrennt sind und beide in parallelen, der Oberfläche des Profils 10 zugewandten Schlitzen 22a, 22b münden. Die Schlitze 22a, 22b liegen in geringem Abstand zur Oberfläche des Profils 10 und erstrecken sich in der Richtung senkrecht zur Zeichenebene über eine gewisse Breite, die der Kontur auf der Oberfläche des Profils 10 entspricht, auf die Primer aufgetragen werden soll.

Eine Pumpe 24 und eine Leitung 26 bilden ein Zufuhrsystem, mit dem flüssiger Primer aus einem Reservoir 28 angesaugt und der Auftragkammer 16 zugeführt wird. Ein Sauggebläse 30 und eine Leitung 32 bilden ein Absaugsystem, mit dem ein Gemisch aus Luft und flüssigem Primer aus der Absaugkammer 18 abgesaugt wird.

Durch den Schlitz 22 der Auftragdüse 14 wird Primer aus der Auftragkammer 16 auf die Oberfläche des Profils 10 abgegeben, und gleichzeitig wird durch den zwischen der Auftragdüse 14 und der Oberfläche des Profils 10 gebildeten Spalt Umgebungsluft in die Absaugkammer 18 angesaugt. Dabei wird auch überschüssiger Primer wieder von der Oberfläche des Profils 10 abgesaugt und in die Absaugkammer 18 mitgerissen. Von dort wird das Gemisch aus Luft und Flüssigkeit über das Absaugsystem abtransportiert. Auf der Oberfläche des Profils 10 bleibt dann eine lückenlose Primerschicht mit gleichmäßiger und reproduzierbarer Schichtdicke zurück.

Zwischen der Leitung 32 und dem Sauggebläse 30 ist ein Abscheider 34 in der Form eines Zyklons eingefügt. Der Abscheider 34 weist ein äußeres Gehäuse 36 mit einem zylindrischen oberen Teil und einem sich nach unten konisch verjüngenden unteren Teil auf. In dem Gehäuse 36 ist koaxial ein vertikales Innenrohr 38 angeordnet, das mit der Saugseite des Sauggebläses 30 verbunden ist. Das Gehäuse 36 ist an der Oberseite geschlossen, abgesehen von einer Durchführung für das Innenrohr 38. Das verjüngte untere Ende des Gehäuses 36 mündet in einer Decke des Reservoirs 28, das als luftdicht geschlossener Behälter ausgebildet ist und durch ein Wehr 40 in zwei Kammern 42, 44 unterteilt ist. Die Kammer 42 liegt unterhalb des Abscheiders 34, während die Leitung 26 in der Kammer 44 mündet, um flüssigen Primer aus dieser Kammer anzusaugen. Im gezeigten Beispiel bildet somit das Absaugsystem einschließlich des Abscheiders 34 und des Reservoirs 28 ein geschlossenes System, in das Luft ausschließlich über die Auftragdüse 14 eintreten kann. Die Leistung des Sauggebläses 30 ist so angepasst, dass in diesem System ein Unterdruck von etwa 5 - 15 kPa, vorzugsweise etwa 10 kPa aufrechterhalten wird.

Bei dem Primer handelt es sich um einen Primer auf wässriger Basis, der praktisch keine leichtflüchtigen Bestandteile enthält, die bei dem genannten Unterdruck zu rascher Verdampfung neigen.

Das aus der Absaugkammer 18 abgesaugte Gemisch aus Luft und flüssigem Primer strömt über die Leitung 32 tangential in den oberen zylindrischen Teil des Abscheiders 34 ein, so dass im äußeren Gehäuse 36 des Abscheiders eine wirbelförmige Strömung induziert wird, die im konischen unteren Teil des Gehäuses 36 abwärts streicht. Die in der Luft enthaltenen flüssigen Bestandteile werden dabei durch Fliehkraftwirkung nach außen geschleudert und setzen sich an der Innenwand des äußeren Gehäuses 36 ab, wobei sie jedoch nur eine relativ kleine Geschwindigkeitskomponente in der Richtung senkrecht zur Wand des Gehäuses haben. Dadurch wird verhindert, dass die Flüssigkeitstropfen bei Auftreffen auf die Wand fein zerstäubt werden, was zu einer erhöhten Verdunstung und zum Eintrocknen und Ausfällen von Feststoffpigmenten führen würde. Der auf diese Weise wirksam aber schonend von der Luft getrennte Primer läuft an der Innenwand des Gehäuses 36 herab und tropft in die Kammer 42 des Reservoirs 28, während die weitgehend von Flüssigkeit befreite Luft durch das Innenrohr 38 abgesaugt wird.

Die Kammer 42 dient in diesem Beispiel als Absetzbecken, in dem sich eingetrocknete Feststoffanteile, die sich im Laufe der Zeit in geringem Ausmaß bilden können, als Bodensatz 46 ablagern können. Das Wehr 40 verhindert, dass dieser Bodensatz 46 in die Kammer 44 gelangt, während der flüssige Primer über das Wehr in die Kammer 44 übertritt und somit erneut der Auftragdüse 14 zugeführt werden kann.

## Patentansprüche

1. Verfahren zur Unterdruckapplikation von Primer unter Verwendung einer Vorrichtung mit einem Reservoir (28) für flüssigen Primer, einer Auftragdüse (14), die eine Auftragkammer (16) und eine Absaugkammer (18) aufweist, einem Zufuhrsystem (24, 26) zur Zufuhr von Primer aus dem Reservoir (28) zu der Auftragkammer (16), einem Absaugsystem (30, 32) zum Absaugen von Luft und Primer aus der Absaugkammer (18), und einem Abscheider (34) zum Abscheiden von Primer aus der abgesaugten Luft und zum Zurückleiten des abgeschiedenen Primers in das Reservoir (28), **dadurch gekennzeichnet, dass** der Abscheider (34) ein Zyklon ist.

2. Verfahren nach Anspruch 1, bei dem das Absaugsystem (30, 32) so betrieben wird, dass in diesem Absaugsystem einschließlich des Abscheiders (34) und des Reservoirs (28) ein Unterdruck von 5 bis 15 kPa herrscht.

3. Verfahren nach Anspruch 2, bei dem der Primer eine Dispersion auf Wasserbasis ist.

## Claims

1. Method of applying primer with the aid of vacuum, utilizing an apparatus comprising a reservoir (28) for liquid primer, an applicator nozzle (14) having an applicator chamber (16) and a suction chamber (18), a supply system (24, 26) for supplying primer from the reservoir (28) to the applicator chamber (16), a suction system (30, 32) for withdrawing air and primer from the suction chamber (18), and a separator (34) for separating primer from the withdrawn air and recirculating the separated primer into the reservoir (28), **characterized in that** the separator (34) is a cyclone.

2. Method according to claim 1, wherein the suction system (30, 32) is operated such that an underpressure of 5 to 15 kPa is maintained in the suction system including the separator (34) and the reservoir (28).

3. Method according to claim 2, wherein the primer is an aqueous dispersion.

## Revendications

1. Procédé destiné à appliquer un primer par dépression en utilisant un dispositif comportant un réservoir (28) pour un primer liquide, une buse d'application (14) comportant une chambre d'application (16) et une chambre d'aspiration (18), un système de transfert (24, 26) pour transférer le primer à partir du réservoir (28) jusqu'à la chambre d'application (16), un système d'aspiration (30, 32) pour aspirer de l'air et le primer à partir de la chambre d'aspiration (18), et un séparateur (34) pour séparer le primer de l'air aspiré et pour rediriger le primer séparé dans le réservoir (28), **caractérisé en ce que** le séparateur (34) est un cyclone.

2. Procédé selon la revendication 1, dans lequel le système d'aspiration (30, 32) fonctionne de telle sorte qu'il règne une dépression de 5 à 15 kPa dans ce système d'aspiration incluant le séparateur (34) et le réservoir (28).

3. Procédé selon la revendication 2, dans lequel le primer est une dispersion à base d'eau.
